# EUROPEAN PATENT APPLICATION

(11) **EP 4 726 751 A1**
(43) Date of publication of application: **15.04.2026**
(21) Application number: 25206580.0
(22) Date of filing: 03.10.2025
(51) Int. Cl.: H01F 27/32, H01F 27/22, H01F 27/28, H01F 27/30, H01F 30/10, H02M 3/00

(54) **POWER CONVERSION DEVICE**

(30) Priority: 09.10.2024 JP 2024177469
(71) Applicant: Shindengen Electric Manufacturing Co., Ltd., Tokyo 100-0004 (JP)
(72) Inventor: ISHII, Yasuhiro, Asaka City, Saitama 351-8503 (JP); UCHIDA, Yoshitaka, Asaka City, Saitama 351-8503 (JP); SAKATA, Yutaro, Asaka City, Saitama 351-8503 (JP)
(74) Representative: Wynne-Jones IP Limited

(57) **Abstract**

A power conversion device (1) includes: a primary-side substrate (31) having a primary-side mounting portion (312), at which a primary-side electronic component is mounted, and a primary-side winding portion (311); a secondary-side substrate (32) having a secondary-side mounting portion (322), at which a secondary-side electronic component is mounted, and a secondary-side winding portion (321), the secondary-side winding portion (321) being disposed coaxially with the primary-side winding portion (321); a pair of insulating members (361, 362) that are joined together, and that are disposed such that one winding portion among the primary-side winding portion (311) or the secondary-side winding portion (321) is interposed therebetween; and a sealing resin (33) that seals the primary-side winding portion (311), the secondary-side winding portion (321), and the pair of insulating members (361, 362), wherein at least one of the pair of insulating members (361, 362) has a plurality of convex portions (R1, R4) at a face facing the one winding portion.

## Description

### BACKGROUND

### Technical Field

The present disclosure relates to a power conversion device.

### Related Art

A power conversion device disclosed in Japanese Patent Application Laid-open (JP-A) No. 2022-42821 is provided with a first substrate (primary-side substrate) provided with a first coil (primary-side winding portion), and a second substrate (secondary-side substrate) provided with a secondary coil (secondary-side winding portion). Further, it is provided with a pair of insulating members that are coupled together and supported by the primary-side substrate in a state in which a first winding portion is sandwiched from both plate thickness direction sides of the primary-side substrate, and with a core configuring a transformer together with the primary-side winding portion, the secondary-side winding portion, and the pair of insulating members.

A power conversion device disclosed in Japanese Patent Application Laid-open (JP-A) No. 2022-125021 is provided with a primary-side substrate including a primary-side mounting portion at which a primary-side electronic component is mounted, and a primary-side coil (primary-side winding portion), and a secondary-side substrate including a secondary-side mounting portion at which a secondary-side electronic component is mounted and a secondary-side coil (secondary-side winding portion). Further, the primary-side winding portion and the secondary-side winding portion are disposed facing each other in an axial direction, and are sealed by a sealing resin.

In the power conversion device disclosed in JP-A No. 2022-42821, there are cases in which the primary-side winding portion, the secondary-side winding portion, and the pair of insulating members are sealed by a sealing resin. Further, as a material of the primary-side winding portion, an enamel wire, a conductor pattern, a conductor plate, or the like can be employed. Since changing the material of the primary-side winding portion changes the thickness and volume of the primary-side winding portion, the spacing between the primary-side winding portion and the pair of insulating members, and the required amount of sealing resin, vary. As a result, the following two problems may arise:
(1) the primary-side winding portion is displaced from its proper position as a result of molding pressure from the sealing resin; and
(2) short molding occurs.

### SUMMARY

The present disclosure provides a power conversion device with which the inadvertent displacement of a winding portion as a result of the molding pressure of a sealing resin, and the occurrence of short molding, can be prevented or suppressed.

A power conversion device according to the present disclosure includes: a primary-side substrate having a primary-side mounting portion, at which a primary-side electronic component is mounted, and a primary-side winding portion; a secondary-side substrate having a secondary-side mounting portion, at which a secondary-side electronic component is mounted, and a secondary-side winding portion, the secondary-side winding portion being disposed coaxially with the primary-side winding portion; a pair of insulating members that are joined together, and that are disposed such that one winding portion among the primary-side winding portion or the secondary-side winding portion is interposed therebetween; and a sealing resin that seals the primary-side winding portion, the secondary-side winding portion, and the pair of insulating members, in which at least one of the pair of insulating members has plural convex portions at a face facing the one winding portion.

According to the present disclosure, in a case in which the thickness or volume of the one winding portion described above has been changed, by changing the size or the number of the plural convex portions, it is possible to prevent or suppress the inadvertent displacement of one of the winding portions or the occurrence of short molding at a time of molding of the sealing resin.

### BRIEF DESCRIPTION OF THE DRAWINGS

An exemplary embodiment of the present disclosure will be described in detail based on the following figures, wherein:
Fig. 1 is an exploded perspective view illustrating an overall configuration of a power conversion device according to an exemplary embodiment;
Fig. 2 is a cross-sectional view illustrating a partial configuration of a power conversion device according to an exemplary embodiment;
Fig. 3 is a cross-sectional view showing a section along line III-III in Fig. 2;
Fig. 4 is a block diagram illustrating an overall configuration of a power conversion device according to an exemplary embodiment;
Fig. 5 is a perspective view illustrating relevant portions of a power conversion device according to an exemplary embodiment;
Fig. 6 is a perspective view illustrating a primary-side substrate, a secondary-side substrate, and a pair of insulating members included in a power conversion device according to an exemplary embodiment;
Fig. 7 is a cross-sectional view showing a section along line VII-VII in Fig. 6;
Fig. 8 is an exploded perspective view illustrating a primary-side substrate, a secondary-side substrate, and a pair of insulating members included in a power conversion device according to an exemplary embodiment;
Fig. 9 is a perspective view illustrating a primary-side substrate included in a power conversion device according to an exemplary embodiment;
Fig. 10 is a perspective view illustrating a secondary-side substrate included in a power conversion device according to an exemplary embodiment;
Fig. 11 is a perspective view illustrating a bracket included in a power conversion device according to an exemplary embodiment;
Fig. 12 is a perspective view illustrating a control board included in a power conversion device according to an exemplary embodiment;
Fig. 13 is an explanatory view for illustrating types of primary-side substrate and secondary-side substrate;
Fig. 14 is a circuit diagram illustrating a first example of a power conversion circuit included in a power conversion device according to an exemplary embodiment;
Fig. 15 is a circuit diagram illustrating a second example of a power conversion circuit included in a power conversion device according to an exemplary embodiment;
Fig. 16 is a circuit diagram illustrating a third example of a power conversion circuit included in a power conversion device according to an exemplary embodiment;
Fig. 17 is a perspective view illustrating a first insulating member included in a power conversion device according to an exemplary embodiment;
Fig. 18 is a perspective view illustrating a first insulating member included in a power conversion device according to an exemplary embodiment;
Fig. 19 is a perspective view illustrating a second insulating member included in a power conversion device according to an exemplary embodiment;
Fig. 20 is a perspective view illustrating a second insulating member included in a power conversion device according to an exemplary embodiment;
Fig. 21 is an exploded perspective view illustrating a primary-side substrate, a secondary-side substrate, and a pair of insulating members included in a modified example of a power conversion device according to an exemplary embodiment;
Fig. 22 is a cross-sectional view illustrating a portion of a power conversion device according to a comparative example;
Fig. 23 is a cross-sectional view illustrating a portion of a power conversion device according to an exemplary embodiment; and
Fig. 24 is a plan view illustrating a portion of a power conversion device according to a comparative example.

### DETAILED DESCRIPTION

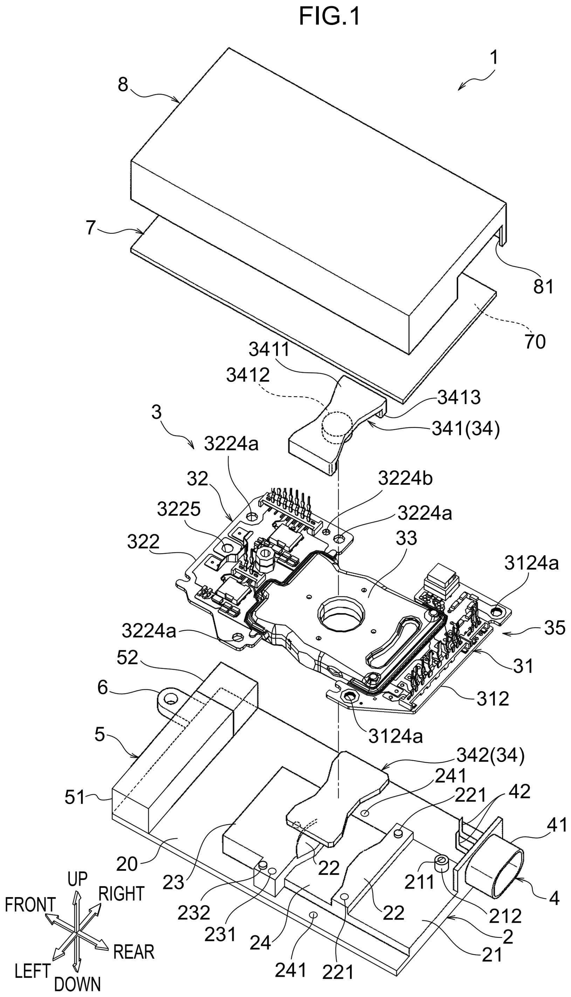

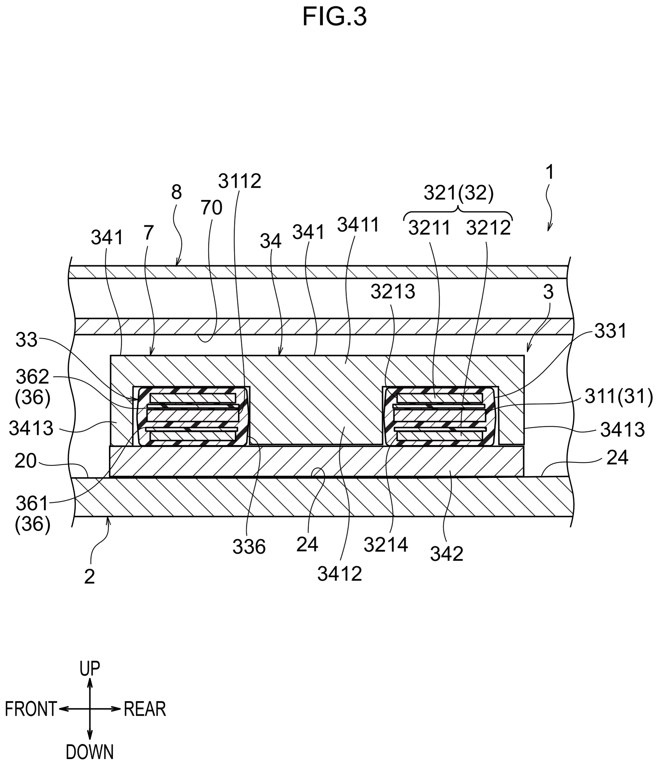

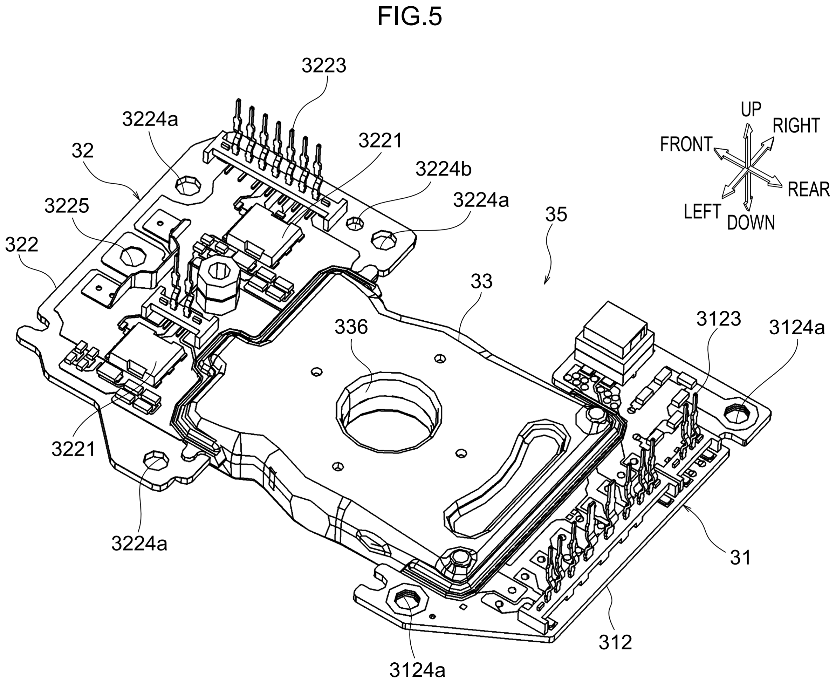

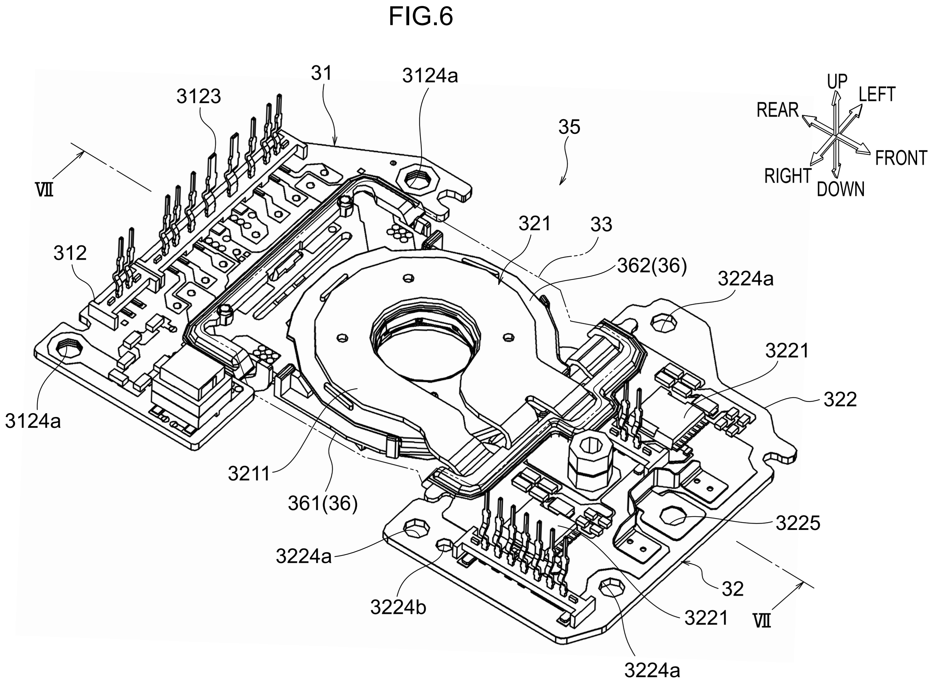

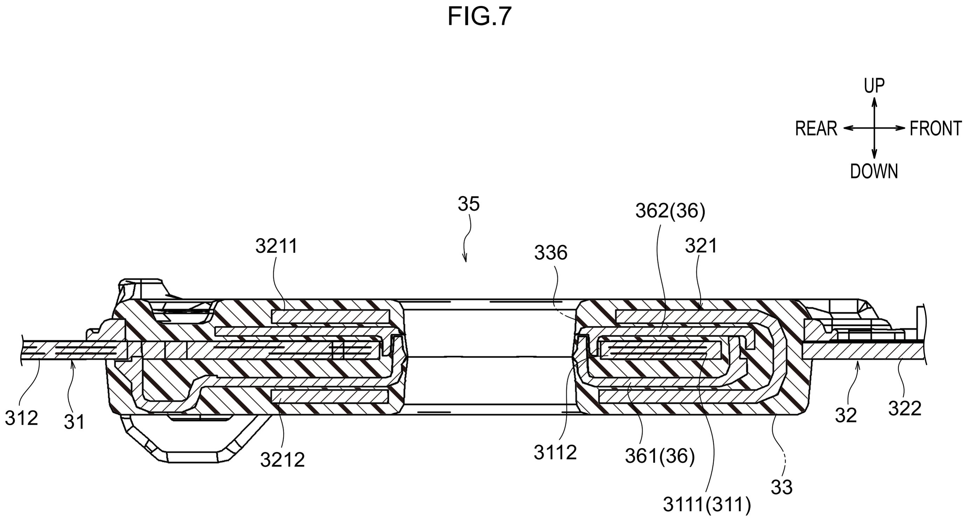

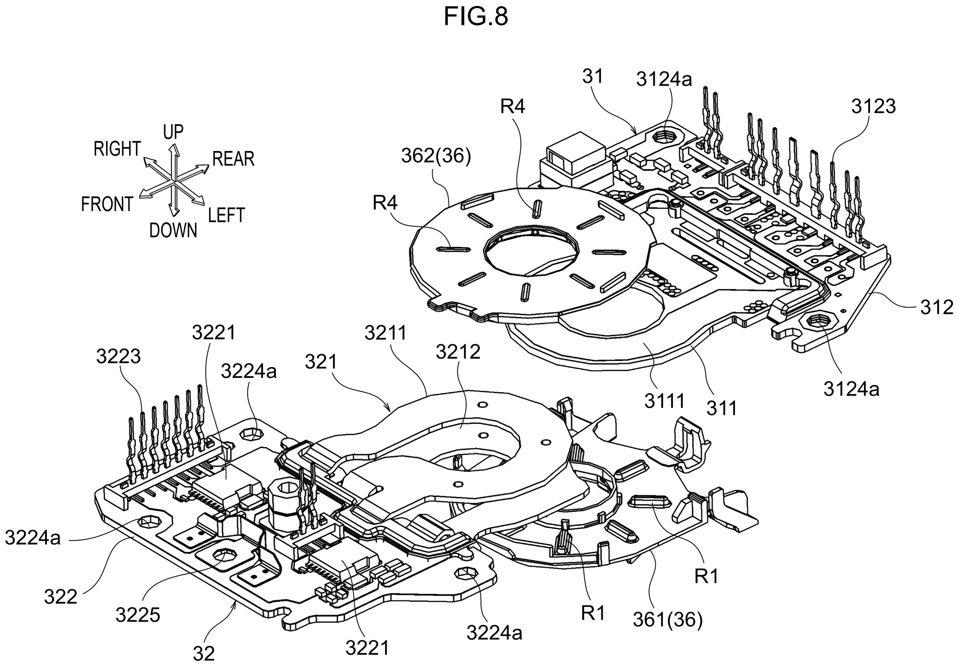

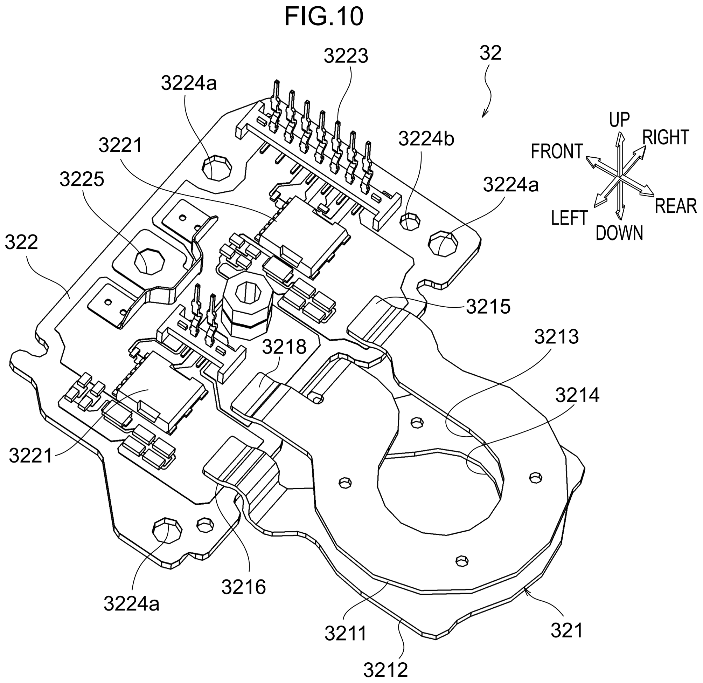

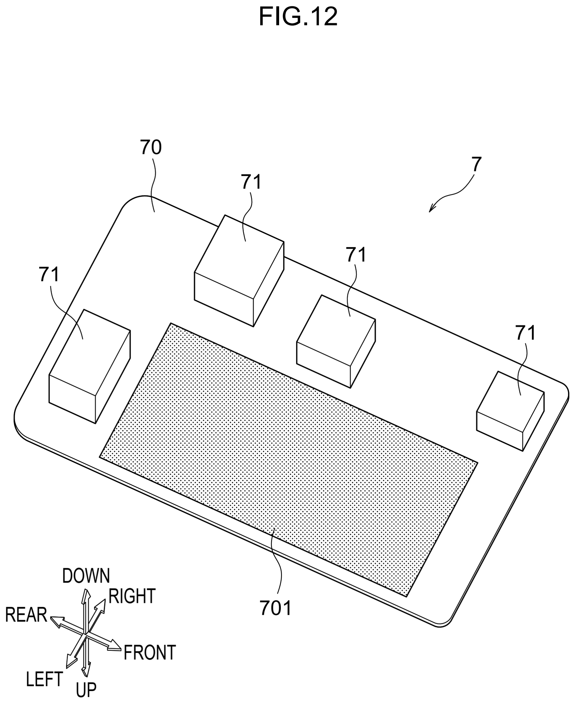

Explanation follows regarding exemplary embodiments of the present disclosure, with reference to Figs. 1 to 24. In the present exemplary embodiment, explanation regarding the position, orientation, and the like of constituent elements is provided with directions indicated, as appropriate, by up and down, left and right, and front and rear arrows in the respective drawings defined as an up-down direction, a left-right direction, and a front-rear direction for convenience of explanation. Further, in the respective drawings, some reference numerals may be omitted in the interests of simplifying viewing of the drawings. As illustrated in Fig. 1, a power conversion device 1 according to the present exemplary embodiment includes a case 2, a transformer 3, an input connector 4, a smoothing circuit portion 5, an output connector 6, a control board 7, and a cover 8.

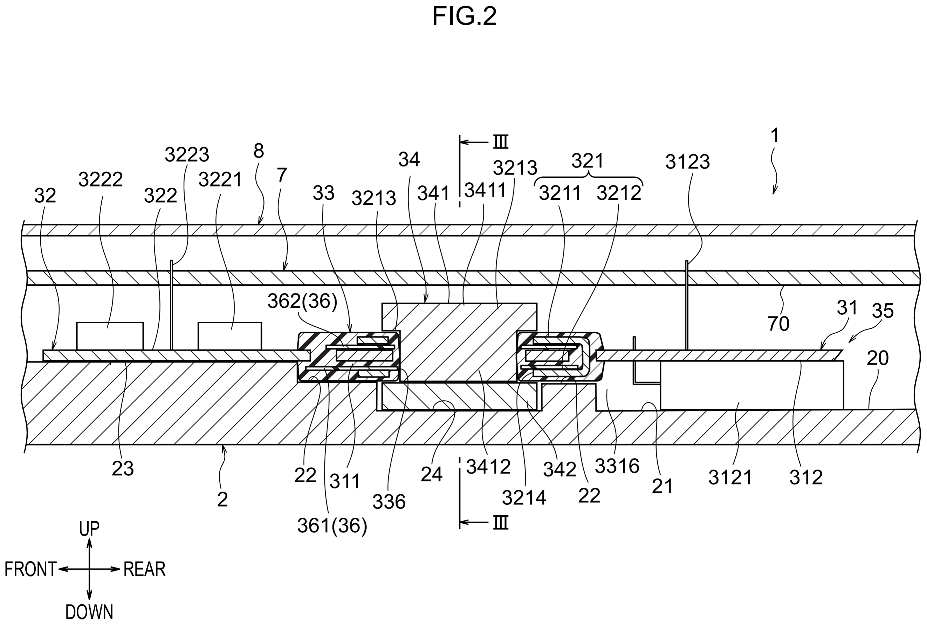

The case 2 is made of a material with high thermal conductivity, such as aluminum, and is formed in a plate shape with its thickness direction in the up-down direction. As illustrated in Figs. 1 and 2, the case 2 includes a mounting face 20 facing the upper side. A first mounting area 21, a second mounting area 22, and a third mounting area 23 for mounting the transformer 3 are provided at the mounting face 20. The first mounting area 21, the second mounting area 22, and the third mounting area 23 are provided side-by-side from the rear toward the front in this order. The first mounting area 21 is a planar region with substantially the same height as the mounting face 20. The second mounting area 22 is a planar region that is one step higher than the first mounting area 21. The third mounting area 23 is a planar region that is one step higher than the second mounting area 22. The first mounting area 21, the second mounting area 22, and the third mounting area 23 have a stepped configuration in which the first mounting area 21 is the lowest, and the second mounting area 22 and the third mounting area 23 are then each raised by one step in this order. A core mounting concave portion 24 for mounting the transformer core 34, described later, is formed at the second mounting area 22. The core mounting concave portion 24 is a concave portion extending in the left-right direction, which extends to both left and right end portions of the second mounting area 22, and is open in the left-right direction. A bottom face of the core mounting concave portion 24 is a plane having substantially the same height as the mounting face 20 and the first mounting area 21. The case 2 has the function of a heat sink that dissipates and cools heat from the transformer 3 and the like mounted on the mounting face 20. The case 2 is an air-cooling type heat sink utilizing convection of air, but may be a refrigerant type heat sink utilizing a cooling medium such as water.

A single cylindrical substrate support portion 212 is formed at the first mounting area 21 of the case 2. The substrate support portion 212 is a cylinder extending in the up-down direction, and a screw hole 211 is formed at an upper face of the substrate support portion 212. A height of an upper surface of the substrate support portion 212 is approximately the same height as the second mounting area 22. A single screw hole 221 is formed at a left end portion of the second mounting area 22 in a region closer to the first mounting area 21 than the core mounting concave portion 24. The screw hole 211 of the substrate support portion 212 and the screw hole 221 of the second mounting area 22 are disposed so as to be offset from each other in the front-rear direction. A single convex protrusion **222** is formed at a right end portion of the second mounting area 22 in a region closer to the first mounting area 21 than the core mounting concave portion 24. Two screw holes 231 (only one of which is illustrated in Fig. 1) are formed at an interval in the left-right direction in the third mounting area 23. A single convex protrusion 232 is formed at a left end portion of the third mounting area 23 in a region further from the core mounting concave portion 24 than the screw hole 231. Two screw holes 241 are formed in the upper face of the case 2 at both left and right sides of the core mounting concave portion 24. The two screw holes 241 are disposed offset from each other in the front-rear direction.

The transformer 3 includes a primary-side substrate 31, a secondary-side substrate 32, a sealing resin 33, an insulating member 36, and a transformer core 34, serving as a core. In the following explanation, it is assumed that the plate thickness directions of the primary-side substrate 31 and the secondary-side substrate 32 are the up-down direction.

As illustrated in Figs. 1 and 5 to 9, the primary-side substrate 31 includes a primary-side winding portion 311 provided at the substrate front side, and a primary-side mounting portion 312 provided at the substrate rear side. The primary-side winding portion 311 and the primary-side mounting portion 312 are formed at a single substrate. A primary-side winding 3111 consisting of a belt-shaped conductor pattern is formed at the primary-side winding portion 311. The primary-side winding 3111 has a coil of one turn (one circuit) formed in a spiral manner at the upper face of the primary-side winding portion 311, and a coil of one turn further formed at a lower face of the primary-side winding portion 311 in a spiral shape so as to be linked to this coil, thereby configuring a coil of a total of two turns. An axial direction of the primary-side winding 3111 coincides with a plate thickness direction. The primary-side winding 3111 is configured such that a spiral coil of one turn is formed with two layers linked in the plate thickness direction. An end portion at the outer circumferential side of the primary-side winding 3111 at the upper face of the primary-side winding portion 311 extends to the primary-side mounting portion 312 and is connected to a conductor pattern 3125 (wiring pattern) formed at the primary-side mounting portion 312. Further, an end portion at an inner circumferential side of the primary-side winding 3111 at the upper face of the primary-side winding portion 311 is linked to the coil of the second layer in the plate thickness direction, and an end portion of the second layer coil extends to the primary-side mounting portion 312 and is connected to a conductor pattern 3126 (wiring pattern) formed in the primary-side mounting portion 312. Note that the coil of the second layer of the primary-side winding 3111 may be formed in a spiral shape inside the primary-side winding portion 311. Further, a configuration in which the number of turns of the primary-side winding 3111 is increased may be employed by using four or more multilayer substrates as the primary-side substrate 31.

A through hole 3112 that penetrates in the up-down direction inside the primary-side winding 3111 is formed in the primary-side winding portion 311. An outside shape of the primary-side winding portion 311 is a circular shape corresponding to an outside shape of the primary-side winding 3111 formed in the primary-side winding portion 311. Note that the primary-side substrate 31 may include a primary-side winding portion formed of a conductor plate, instead of the primary-side winding portion 311 described above. In such cases, the configuration is such that the primary-side winding portion formed of a conductor plate is joined to the substrate provided with the primary-side mounting portion 312. Further, in such cases, the primary-side winding portion formed of the conductor plate configures a portion of the primary-side substrate 31. Further, the primary-side substrate 31 may include a primary-side winding portion formed of an α-winding, instead of the primary-side winding portion 311 described above. In such cases, the configuration is such that the primary-side winding portion formed of the α-winding is joined to the substrate provided with the primary-side mounting portion 312. Further, in such cases, the primary-side winding portion including the α-winding configures a portion of the primary-side substrate 31.

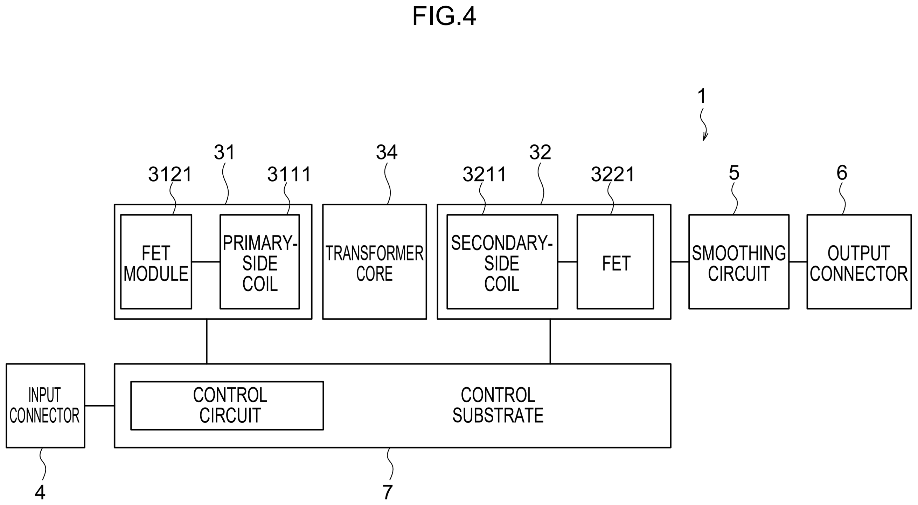

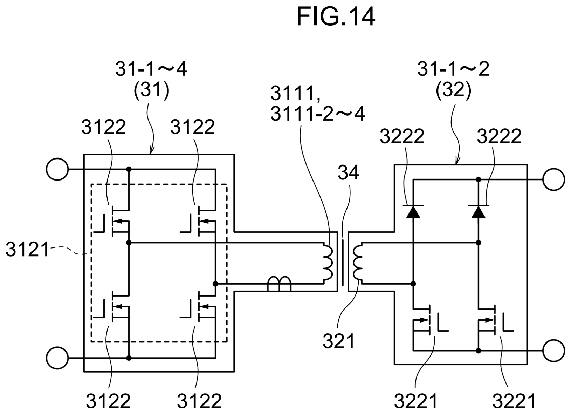

The primary-side mounting portion 312 is formed in a rectangular plate shape when viewed from the up-down direction. The primary-side winding portion 311 is linked to and integral with a front side edge of the primary-side mounting portion 312. A single FET module 3121 (primary-side electronic component; only illustrated in Figs. 2 and 14 to 16) is mounted at a lower face of the primary-side mounting portion 312. The FET module 3121 includes four FETs 3122 (field effect transistors) and a circuit board (see Figs. 14 to 16), configuring a bridge circuit as a primary-side circuit, a sealing resin in a rectangular parallelepiped shape that houses these bridge circuits inside, and plural connection terminals that are connected to the bridge circuit and extend to the outside of the sealing resin. The FET module 3121 is mounted at the lower face of the primary-side mounting portion 312 by inserting and soldering plural connection terminals through through holes formed in the primary-side mounting portion 312 from the lower face side of the primary-side mounting portion 312. The FET module 3121 thus mounted is connected to the primary-side winding 3111 via conductor patterns 3125, 3126 (wiring patterns) formed in the primary-side mounting portion 312 (see Fig. 4), and DC current input to the FET module 3121 is converted to AC current, and is output to the primary-side winding 3111.

Plural connection pins 3123 for electrically connecting the primary-side substrate 31 to the control board 7 are attached extending upward from an upper surface of the primary-side mounting portion 312. Each of the plural connection pins 3123 is connected to a wiring pattern formed at the primary-side mounting portion 312, and is electrically connected to the FET module 3121 mounted at the primary-side mounting portion 312 via this wiring pattern.

Two fixing holes 3124a that penetrate the primary-side mounting portion 312 in the up-down direction are formed in the primary-side mounting portion 312. Each of the two fixing holes 3124a is a hole through which a screw (not illustrated) for fixing the primary-side substrate 31 to the case 2 is passed, and they correspond to the screw holes 211, 221 formed in the first mounting area 21 and the second mounting area 22 of the case 2. The two fixing holes 3124a are disposed at the left and right end portions of the primary-side mounting portion 312, respectively. A positioning hole 3224b corresponds to the convex protrusion 222 formed in the second mounting area 22, and is disposed at the right front end part side of the primary-side mounting portion 312.

As illustrated in Figs. 1, 5 to 8, and 10, the secondary-side substrate 32 includes a secondary-side winding portion 321 provided at the substrate rear side, and a secondary-side mounting portion 322 provided at the substrate front side. The secondary-side winding portion 321 is manufactured by press molding a single conductive plate, and the secondary-side mounting portion 322 is formed at the substrate. The secondary-side winding portion 321 includes a pair of winding portions 3211, 3212 each consisting of one turn. An axial direction of each secondary-side winding portion 321 coincides with a plate thickness direction. The pair of winding portions 3211, 3212 each have a substantial C-shape that is open at the front side as viewed from the up-down direction. Opening portions 3213, 3214, each having a circular shape as viewed from the up-down direction, are formed in center portions of the pair of winding portions 3211, 3212. The pair of winding portions 3211, 3212 are coaxially disposed with an axial direction spacing therebetween, and are connected in series such that their respective circumferential end portions are linked together. A first lead portion 3215 extends from another circumferential direction end portion of one winding portion 3211 (at the upper side), and a second lead portion 3216 extends from another circumferential direction end portion of the other winding portion 3212 (lower side). Ends of the pair of winding portions 3211, 3212 at opposite ends from the first lead portion 3215 and the second lead portion 3216 are connected in series to each other. A third lead portion 3218 extends from the vicinity of this connecting portion. The first lead portion 3215, the second lead portion 3216, and the third lead portion 3218 each extend to the secondary-side mounting portion 322 and are connected to a wiring pattern (not illustrated) formed at the secondary-side mounting portion 322. Each of the first lead portion 3215, the second lead portion 3216, and the third lead portion 3218 corresponds to a "lead portion" in the present disclosure. Note that the secondary-side winding portion 321 may be formed from a conductor pattern formed on the substrate. In such cases, the secondary-side winding portion 321 and the secondary-side mounting portion 322 may be formed on a single substrate. Further, the secondary-side substrate 32 may include a secondary-side winding portion including an α-winding, instead of the secondary-side winding portion 321 described above. In such cases, a configuration is such that a secondary-side winding portion including an α-winding is joined to a substrate provided with the secondary-side mounting portion 322. Further, in such cases, the secondary-side winding portion including the α-winding configures a portion of the secondary-side substrate 32. Detailed explanation follows regarding the secondary-side winding portion 321.

The secondary-side mounting portion 322 is formed in a rectangular plate shape when viewed from the up-down direction. The first lead portion 3215 and the second lead portion 3216 of the secondary-side winding portion 321 are connected to a rear end side of the upper face of the secondary-side mounting portion 322, and the secondary-side winding portion 321 and the secondary-side mounting portion 322 are linked together and integral. Two FETs 3221 (field effect transistors; secondary-side electronic components) are mounted at the upper face of the secondary-side mounting portion 322. The FETs 3221 are connected to wiring patterns formed in the secondary-side mounting portion 322, and together with these wiring patterns, configure a secondary-side circuit (bridge circuit). The secondary-side circuit is connected to the secondary-side winding portion **3211.**

Plural connection pins 3223 for electrically connecting the secondary-side substrate 32 to the control board 7 are attached extending upward from an upper surface of the secondary-side mounting portion 322. A third lead portion 3218 extends from the vicinity of this connecting portion. The first lead portion 3215, the second lead portion 3216, and the third lead portion 3218 are each connected to a wiring pattern formed in the secondary-side mounting portion 322, and are electrically connected to the FET 3221 mounted at the secondary-side mounting portion 322 through the wiring pattern.

Three fixing holes 3224a and a single positioning hole 3224b that penetrate the secondary-side mounting portion 322 in the up-down direction are formed in the secondary-side mounting portion 322. Each of the three fixing holes 3224a is a hole through which a screw (not illustrated) for fixing the secondary-side substrate 32 to the case 2 is passed, and these correspond to the three screw holes formed in the third mounting area 23 of the case 2. The three fixing holes 3224a are aligned at intervals in the left-right direction. The positioning hole 3224b corresponds to the convex protrusion 232 formed in the third mounting area 23, and is disposed at a **right** end portion of the secondary-side mounting portion 322. Further, a single connection hole 3225 that penetrates the secondary-side mounting portion 322 in the up-down direction is formed in the secondary-side mounting portion 322. The connection hole 3225 is formed at a position at an opposite side from the secondary-side winding portion 321 in the secondary-side mounting portion 322. The connection hole 3225 is a hole for fixing a bus bar (not illustrated), for electrically connecting a wiring pattern (secondary-side circuit) formed in the secondary-side mounting portion 322 with the smoothing circuit portion 5, by screwing or the like.

As illustrated in Figs. 2, 3, and 6 to 8, the insulating member 36 is configured by a first insulating member 361 and a second insulating member 362. The first insulating member 361 and the second insulating member 362 correspond to "a pair of insulating members" in the present disclosure. The first insulating member 361 and the second insulating member 362 are made of a material having electrical insulating properties. Specifically, as an example, the first insulating member **361** and the second insulating member **361** are configured of a resin to which a thermally conductive filler having insulating properties and thermal conductivity is added. Examples of the thermally conductive filler include aluminum oxide, silicon oxide, magnesium oxide, boron nitride, and aluminum nitride.

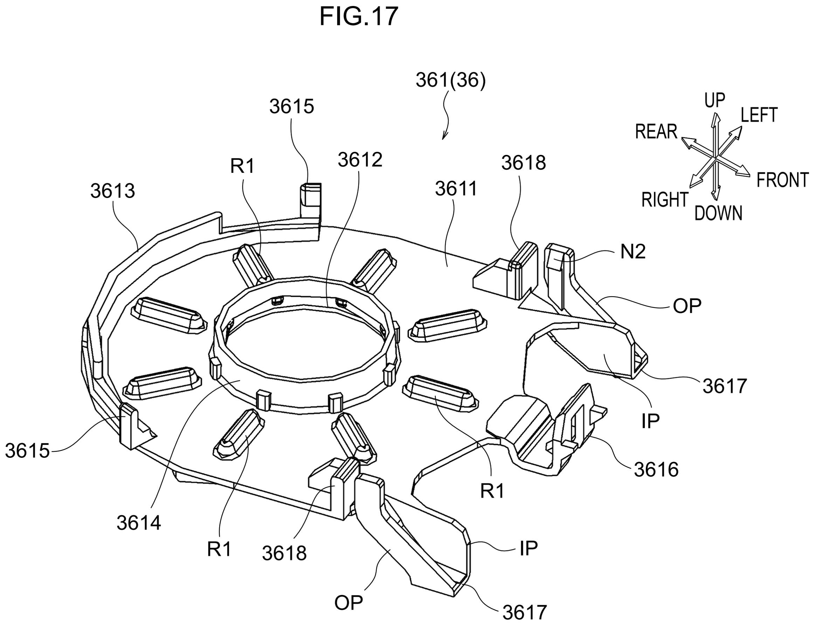

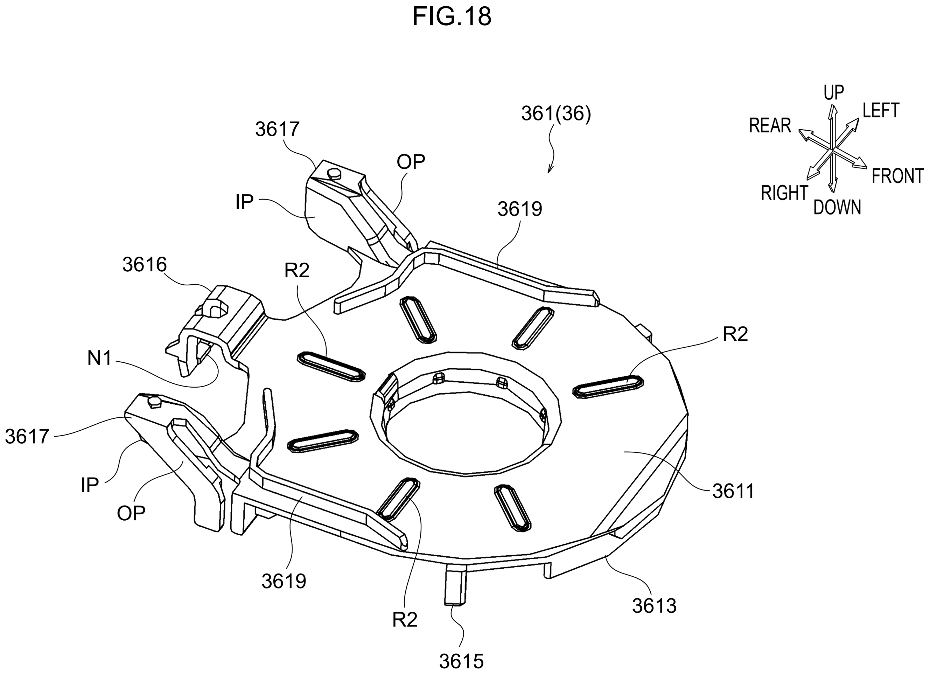

As illustrated in Figs. 17 and 18, the first insulating member 361 includes a main body portion 3611 formed in a substantial disk shape with its plate thickness direction in the up-down direction. A circular through hole 3612 is formed in a center portion of the main body portion 3611. A peripheral wall portion 3613 that projects upward is formed at a rear edge portion of the main body portion 3611. The peripheral wall portion 3613 has an arc shape that is curved convexly toward the rear side when viewed from the up-down direction. Projecting portions 3615 that project upward are formed at both left and right end portions of the peripheral wall portion 3613. A boss portion 3614 that projects upward is formed at an edge portion of the through hole 3612 in the main body portion 3611. The boss portion 3614 has a cylindrical shape with its axial direction along the up-down direction.

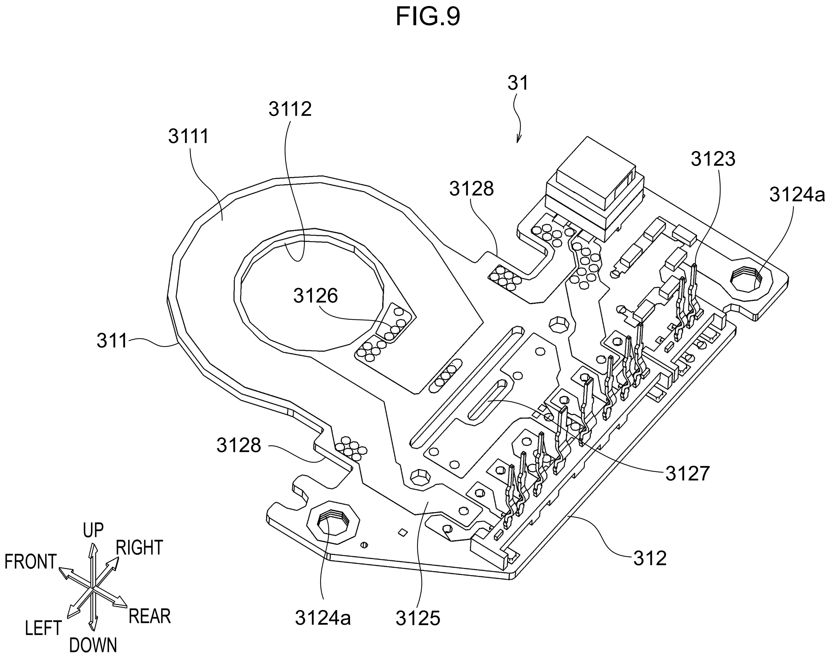

An anchoring portion 3616 extends toward the front side from a left-right center portion of a front end portion of the main body portion 3611. The front portion of the anchoring portion 3616 is bent toward the upper side, and is fitted into a slit-shaped elongate hole 3127 (see Fig. 9) formed in the primary-side mounting portion 312 of the primary-side substrate 31. A claw N1 that is elastically deformable is provided at a front portion of the anchoring portion 3616, and the claw N1 catches at an edge portion of the elongate hole 3127.

Substrate restraining portions 3617 extend toward the front side from left and right end portions of a front end portion of the main body portion 3611, respectively. The left and right substrate restraining portions 3617 each include an inside portion IP extending toward the front side and lower side from left and right end portions of a front end portion of the main body portion 3611, and an outside portion OP extending upward and toward the rear side after extending toward left and right direction outer sides from a lower end portion of the inside portion IP. The outside portion OP extends further upward than the main body portion 3611. The outside portions OP of the left and right substrate restraining portions 3617 are respectively inserted into two left and right notched portions 3128 (see Fig. 9) formed at the rear edge portion of the primary-side mounting portion 312. A claw N2 projecting toward a center side in the left-right direction is provided at an upper end portion of the outside portion OP, and these claws N2 catch at edge portions of the notched portions 3128. Projecting portions 3618 that project upward are formed at left and right end portions of a front end portion of the main body portion 3611 at rear sides of the outside portions OP of the left and right substrate restraining portions 3617. The left and right projecting portions 3618 contact or face, in close proximity, the rear edge portion of the primary-side mounting portion 312.

Plural (here, eight) ribs R1 are formed on an upper face of the main body portion 3611. The eight ribs R1 are disposed in a row in the circumferential direction of the main body portion 3611 and around the boss portion 3614. The eight ribs R1 project upward from the main body portion 3611, and are elongated with their length along the radial direction of the main body portion 3611. Plural (here, seven) ribs R2 are formed on a lower face of the main body portion 3611. The seven ribs R2 are disposed in a row in the circumferential direction of the main body portion 3611 and around the through hole 3612. The seven ribs R2 project toward a lower side of the main body portion 3611, and are elongated with a length direction along a radial direction of the main body portion 3611. The rib R2 is not formed at the left-right direction center portion of the front portion of the lower face of the main body portion 3611. Further, two left and right winding engagement portions 3619 are formed on the **lower** face of the main body portion 3611. The two left and right winding engagement portions 3619 extend along the front-rear direction at both left and right end portions of the **lower** face of the main body portion 3611, and extend toward the left-right direction center side at a front end portion of the **lower** face of the main body portion 3611.

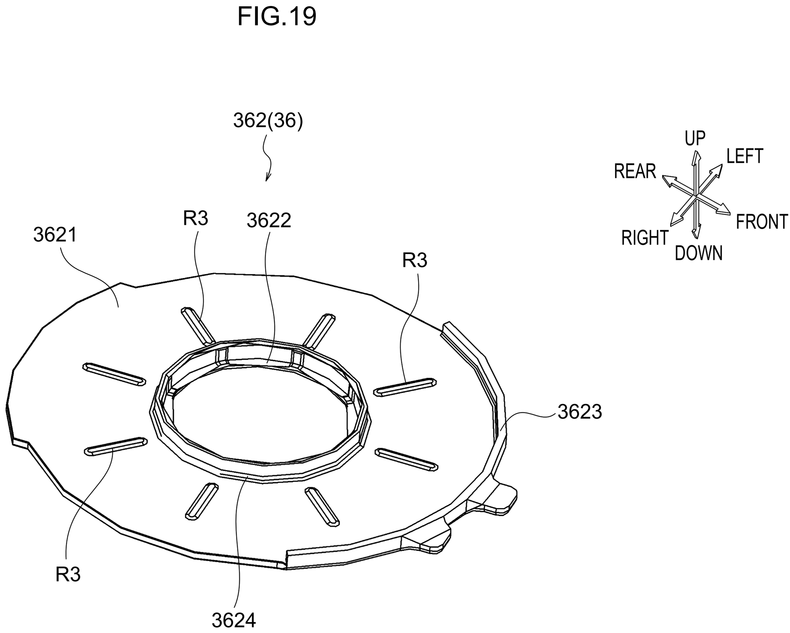

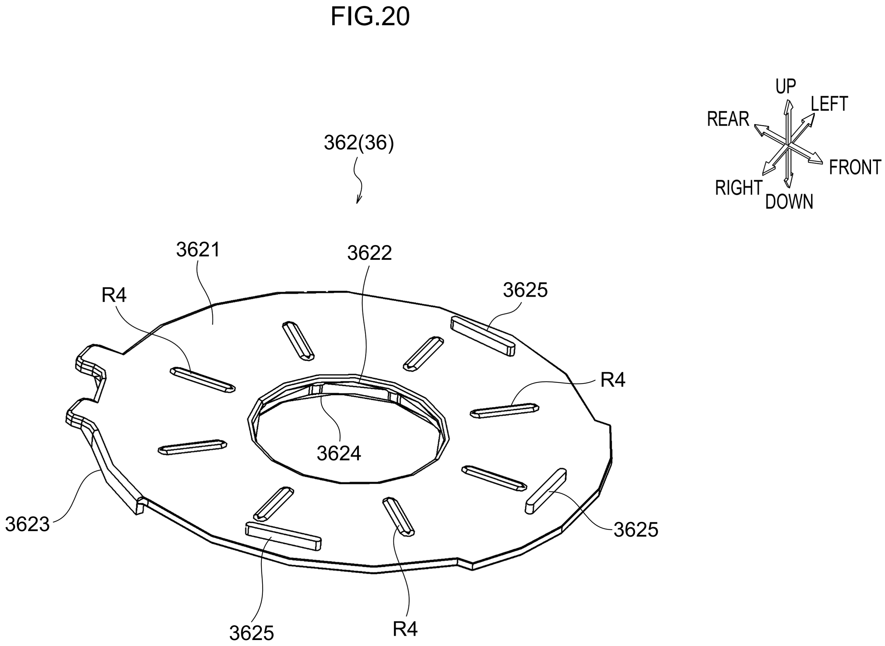

As illustrated in Figs. 19 and 20, the second insulating member 362 includes a disk-shaped main body portion 3621 that has a plate thickness direction in an up-down direction. A circular through hole 3622 is formed in a center portion of the main body portion 3621. A peripheral wall portion 3623 that projects downward is formed at a rear edge portion of the main body portion 3621. The peripheral wall portion 3623 has an arc shape that is curved convexly toward the front side when viewed from the up-down direction. A boss portion 3624 that projects downward is formed at an edge portion of the through hole 3622 in the main body portion 3621. The boss portion 3624 is in the shape of a ring with its axial direction along the up-down direction.

Plural (here, eight) ribs R3 are formed on a lower face of the main body portion 3621. The eight ribs R3 are disposed in a row in the circumferential direction of the main body portion 3621 and around the boss portion 3624. The eight ribs R3 project toward a lower side of the main body portion 3621, and are elongated with a length direction along a radial direction of the main body portion 3621. Plural (here, eight) ribs R4 are formed on an upper surface of the main body portion 3621. The eight ribs R4 are disposed in a row in the circumferential direction of the main body portion 3621 and around the through hole 3622. The eight ribs R4 project upward from the main body portion 3621, and are elongated with their length along the radial direction of the main body portion 3621. The above-mentioned ribs R1 and R3 correspond to "convex portions" in the present disclosure. Further, plural (here, three) winding engagement portions 3625 are provided on an upper face of the main body portion 3621. The three winding engagement portions 3625 are formed at a left end portion, a right end portion, and a **front** end portion of the upper face of the main body portion 3621. The three winding engagement portions 3625 project upward from the main body portion 3621, and are elongated with a length direction along the circumferential direction of the main body portion 3621.

The first insulating member 361 and the second insulating member 362 having the above configuration are coupled together and attached to the primary-side substrate 31 in a state in which the primary-side winding portion 311 of the primary-side substrate 31 is sandwiched from both plate thickness direction sides. Explanation follows regarding a method of manufacturing the transformer 3, including a method of mounting the first insulating member 361 and the second insulating member 362 with respect to the primary-side substrate 31.

When the transformer 3 is assembled, first, the first insulating member 361 and the second insulating member 362 are mounted at the primary-side substrate 31. At the time of this mounting, the first insulating member 361 is brought near to the primary-side winding portion 311 from the lower side, and a lower face of the primary-side winding portion 311 engages with (contacts or faces in close proximity to) the eight ribs R1 of the first insulating member 361. At such time, the boss portion 3614 of the first insulating member 361 is fitted into the through hole 3112 of the primary-side winding portion 311, and the primary-side winding portion 311 is put in a state of being covered from the rear side by the peripheral wall portion 3613 of the first insulating member 361. Further, at such time, the anchoring portion 3616 of the first insulating member 361 is inserted into the elongate hole 3127 of the primary-side mounting portion 312, the claw N1 of the anchoring portion 3616 catches at the edge portion of the elongate hole 3127, and the claws N2 of the outside portions OP of the left and right substrate restraining portions 3617 catch at the edge portions of the notched portions 3128 of the primary-side mounting portion 312.

Further, at the time of the above-described mounting, the second insulating member 362 is brought near to the primary-side winding portion 311 from the upper side, and an upper face of the primary-side winding portion 311 engages with (contacts or faces in close proximity to) the eight ribs R3 of the second insulating member 362. At such time, the boss portion 3614 of the first insulating member 361 is fitted into the through hole 3622 of the second insulating member 362, and a state is achieved in which the peripheral wall portion 3613 of the first insulating member 361 is engaged with the front side of the peripheral wall portion 3623 of the second insulating member 362. In this state, the primary-side winding portion 311 is sandwiched between the first insulating member 361 and the second insulating member 362 in the up-down direction. Thus, the mounting of the insulating member 36 to the primary-side substrate 31 is completed.

The secondary-side substrate 32 is assembled with the primary-side substrate 31 at which the insulating member 36 is mounted. When this assembly is performed, the primary-side substrate 31 and the secondary-side substrate 32 are brought near to each other along the front-rear direction. Thus, the primary-side winding portion 311, the main body portion 3611 of the first insulating member 361, and the main body portion 3621 of the second insulating member 362 are inserted between the pair of winding portions 3211, 3212 of the secondary-side winding portion 321. In this state, the lower winding portion 3212 contacts, or faces in close proximity to, the three winding engagement portions 3625 of the first insulating member 361, and the upper winding portion 3211 contacts, or faces in close proximity to, the two winding engagement portions 3619 of the second insulating member 362. Thus, the pair of winding portions 3211, 3212 are disposed concentrically with respect to the primary-side winding portion 311, the main body portion 3611 of the first insulating member 361, and the main body portion 3621 of the second insulating member 362. Further, in this state, the upper face of the lower winding portion 3212 engages with (contacts or faces in close proximity to) the seven ribs R2 of the first insulating member 361), and the lower face of the upper winding portion 3211 engages with (contacts or faces in close proximity to) the eight ribs R4 of the second insulating member 362. When the secondary-side substrate 32 is attached to the primary-side substrate assembly 35 in this manner, a single assembly consisting of the primary-side substrate 31, the secondary-side substrate 32, and the insulating member 36 is achieved.

Next, molding of the sealing resin 33 is performed. As illustrated in Figs. 1 to 3 and Figs. 5 to 7, the sealing resin 33 seals the primary-side **coil** 311 of the primary-side substrate 31, the secondary-side winding portion 321 of the secondary-side substrate 32, and the insulating member 36. The sealing resin 33 is, for example, a mold resin molded by transfer molding, and is made of a material having electrical insulating properties. The resin configuring the sealing resin 33 is, for example, a resin to which a thermally conductive filler having insulating properties and thermal conductivity is added. Examples of the thermally conductive filler include aluminum oxide, silicon oxide, magnesium oxide, boron nitride, and aluminum nitride.

The sealing resin 33 covers the entire primary-side winding portion 311, secondary-side winding portion 321, and insulating member 36. As described above, the secondary-side winding portion 321 integrally includes the pair of winding portions 3211, 3212, and the plural lead portions 3215, 3216, 3218 that are connected to the secondary-side mounting portion 322. The sealing resin 33 covers the pair of winding portions 3211, 3212 and the lead portions 3215, 3216, 3218. A circular through-hole 336 is formed in a center portion of the sealing resin 33.

A portion of the primary-side mounting portion 312 at the side of the primary-side winding portion 311 is embedded in the sealing resin 33, and a portion of the secondary-side mounting portion 322 at the side of the secondary-side winding portion 321 is embedded in the sealing resin 33. The configuration is such that electronic components are not mounted at portions in the vicinity of the sealing resin 33 in the primary-side mounting portion 312 and the secondary-side mounting portion 322. These portions are portions that contact a mold for transfer molding. Note that mounting of electronic components to the primary-side mounting portion 312 and the secondary-side mounting portion 322 is performed prior to transfer molding of the sealing resin 33. This enables, for example, soldering work of the electronic component to be facilitated. By molding the above sealing resin 33, the primary-side substrate 31, the secondary-side substrate 32, and the insulating member 36 are integrated with each other via the sealing resin 33. Thus, the primary-side substrate 31, the secondary-side substrate 32, the insulating member 36, and the sealing resin 33 are assembled together, thereby configuring a substrate assembly 35.

The transformer core 34 includes an E-type first core member 341 made of a magnetic material, and an I-type second core member 342 made of a magnetic material. The first core member 341 includes a plate-like base portion 3411 with its plate thickness direction along the up-down direction, a columnar insertion portion 3412 extending downward from a lower face center of the base portion 3411, and two wall portions 3413 each extending downward from left and right end portions of the base portion 3411. The second core member 342 is formed in a plate shape with its plate thickness direction along the up-down direction. The transformer core 34 is configured by combining a lower face of the insertion portion 3412 and a lower face of the left and right wall portions 3413 of the first core member 341 in face-to-face contact with an upper face of the second core member 342.

The transformer core 34 is assembled with the substrate assembly 35, thereby configuring the transformer 3. Specifically, as described above, the insertion portion 3412 of the first core member 341 is inserted through the through hole 3112 and the opening portions 3213, 3214 that are concentrically disposed, and the left and right wall portions 3413 of the first core member 341 are disposed at left and right sides of the primary-side winding portion 311, the secondary-side winding portion 321, and the sealing resin 33, respectively. A lower face of the insertion portion 3412 and a lower face of the left and right wall portions 3413 of the first core member 341 are in face-to-face contact with an upper face of the second core member 342. Thus, the transformer core 34 is put into an assembled state with respect to the substrate assembly 35.

In the transformer 3 configured in this manner, as illustrated in Figs. 1 to 3, the second core member 342 of the transformer core 34 is inserted from above and mounted in the core mounting concave portion 24 of the case 2. The plate thickness of the second core member 342 is approximately the same as the depth of the core mounting concave portion 24, and an upper surface of the second core member 342 mounted inside the core mounting concave portion 24 and an upper surface of the case 2 configuring the second mounting area 22 are flush. The front and rear end portions of the second core member 342 each have a concave shape that is curved toward the inner side, and correspondingly, the front and rear walls of the core mounting concave portion 24 are convex toward the inner side. Left-right movement of the second core member 342 mounted inside the core mounting concave portion 24 is restricted owing to engagement between these concavities and convexities.

The primary-side substrate 31 is mounted on the mounting face 20 of the case 2 such that the lower face of the FET module 3121 mounted on the lower face of the primary-side mounting portion 312 is in face-to-face contact with the first mounting area 21 of the case 2. The upper surfaces of the two substrate support portions 212 formed in the first mounting area 21 contact the lower surface of the primary-side mounting portion 312, and the primary-side substrate 31 is also supported by the two substrate support portions 212. The convex protrusion 222 of the second mounting area 22 is inserted into the positioning hole 3124b of the primary-side substrate 31 thus mounted, and by screwing screws inserted from above into the two fixing holes 3124a, respectively, into the screw holes 211, 221 in the first mounting area 21 and the second mounting area 22, the primary-side substrate 31 is fixed to the case 2.

The secondary-side substrate 32 is mounted on the mounting face 20 of the case 2 such that the lower face of the secondary-side mounting portion 322 is in face-to-face contact with the third mounting area 23 of the case 2. The convex protrusion 232 of the third mounting area 23 is inserted into the positioning hole 3224b of the secondary-side substrate 32 thus mounted, and by screwing screws inserted from above into the two fixing holes 3224a, respectively, into the two screw holes 231 of the third mounting area 23, the secondary-side substrate 32 is fixed to the case 2.

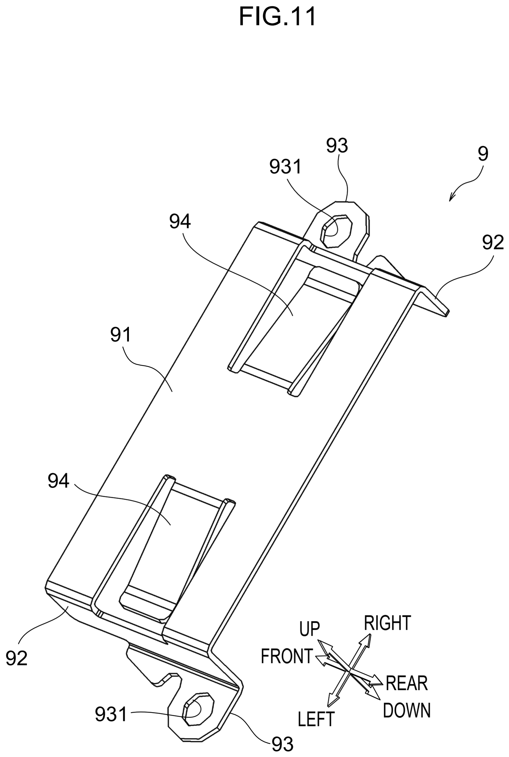

After the transformer 3 is mounted on the case 2, the transformer core 34 is fixed to the case 2 by the bracket 9 illustrated in Fig. 11. The bracket 9 is formed by subjecting a flat plate member made of metal to bending or the like, and has a rectangular base portion 91, left and right side wall portions 92 extending downward from left and right end portions of the base portion 91, left and right fixing portions 93 that extend out toward the left and right direction outer sides from lower end portions of the left and right side wall portions 92, and two core pressing portions 94 provided within the base portion 91. The left and right fixing portions 93 are disposed offset from each other in the front-rear direction. Screw insertion holes 931 that penetrate in the up-down direction are formed in the left and right fixing portions 93.

Each of the two core pressing portions 94 is formed by cutting out the base portion 91 in a U shape, and forms a plate shape extending obliquely downward in the left-right direction from a center portion of the base portion 91. The two core pressing portions 94 are plate springs that are elastically deformable in the up-down direction about a base end portion linked to the base portion 91 as a fulcrum.

After mounting the transformer 3 on the case 2 as described above, the lower surfaces of the left and right fixing portions 93 of the bracket 9 contact, face-to-face, the upper surface of the case 2 at both left and right sides of the core mounting concave portion 24, and the bracket 9 is mounted on the first core member 341 such that the screw insertion holes 931 of the left and right fixing portions 93 and the two left and right screw holes 241 formed in the case 2 are communicated with each other. The bracket 9 thus mounted is fixed to the case 2 by screws inserted from above into the left and right screw insertion holes 931, respectively, being screwed into the two screw holes 221 of the case 2.

When the bracket 9 is fixed to the case 2, the base portion 91 is disposed above the transformer core 34, and the leading end portions of the two core pressing portions 94 are each pressed against the upper surface of the first core member 341, and the two core pressing portions 94 are each elastically deformed. The first core member 341 is pressed against the second core member 342 by the elastic forces of the two core pressing portions 94, and by pressing the second core member 342 against the core mounting concave portion 24 of the case 2, the transformer core 34 is fixed to the case 2.

In the transformer 3 fixed to the case 2 in this manner, as illustrated in Figs. 1 to 3, the primary-side mounting portion 312 of the primary-side substrate 31 is disposed above the first mounting area 21 of the case 2. A lower face of the FET module 3121 mounted on a lower face of the primary-side mounting portion 312 is disposed in face-to-face contact with the first mounting area 21. The sealing resin 33 sealing the primary-side winding portion 311 and the secondary-side winding portion 321 is disposed above the second mounting area 22 of the case 2. A lower face of the sealing resin 33 is disposed in a state of face-to-face contact on the second mounting area 22 via an insulating sheet (not illustrated). The secondary-side mounting portion 322 of the secondary-side substrate 32 is disposed above the third mounting area 23 of the case 2. A lower face of the secondary-side mounting portion 322 is disposed in a state of face-to-face contact on the third mounting area 23 via an insulating sheet (not illustrated). Note that the configuration may be such that a sheet having thermal conductivity or a thermally conductive grease is used instead of the above insulating sheet.

As illustrated in Fig. 1, the input connector 4 includes a housing 41 including a connection opening portion, and plural connection terminals 42 provided inside the housing 41. The input connector 4 is inserted into and attached to a through hole in a rear wall portion of the case 2 from the inside of the case 2, and is provided near the first mounting area 21 at which the primary-side mounting portion 312 of the primary-side substrate 31 is disposed. In the input connector 4 attached to the case 2, end part sides of the plural connection terminals 42 project from the housing 41 and extend inside (at the front side) the case 2, and leading end sides thereof are bent and extend upward. The leading end sides of the plural connection terminals 42 are connected to the control board 7.

The smoothing circuit portion 5 includes an output side choke coil 51 and an output side capacitor 52. The smoothing circuit portion 5 is provided at the front end side of the mounting face 20 of the case 2. The output side choke coil 51 is electrically connected to the secondary-side circuit of the secondary-side substrate 32 through a bus bar (not illustrated) that is fixed using the connection hole 3225 of the secondary-side mounting portion 322 of the secondary-side substrate 32. The smoothing circuit portion 5 smooths the waveform of current output from the secondary-side circuit of the secondary-side substrate 32. The output connector 6 is provided extending forward from a front end of the case 2, and is electrically connected to the smoothing circuit portion 5 (see Fig. 4).

As illustrated in Figs. 1, 2, and 12, the control board 7 is formed in a plate shape with its plate thickness direction along the up-down direction. Plural control electronic components 71 are mounted on the lower face 70 of the control board 7. The plural control electronic components 71 configure a control circuit that controls operation of the FET module 3121 mounted on the primary-side substrate 31, and the two FETs 3221 mounted on the secondary-side substrate 32. The control board 7 is disposed above the mounting face 20 and the transformer 3 disposed on the mounting face 20, such that the lower face 70 of the control board 7 faces the mounting face 20 of the case 2. The plural connection pins 3123 provided at the primary-side mounting portion 312 of the primary-side substrate 31, the plural connection pins 3223 provided at the secondary-side mounting portion 322 of the secondary-side substrate 32, and the plural connection terminals 42 (only illustrated in Fig. 1) of the input connector 4 are respectively connected to the control board 7 disposed above the transformers 3. These connections electrically connect the input connector 4, the control board 7, the primary-side substrate 31, and the secondary-side substrate 32. The plural control electronic components 71 are installed in an area other than an area 701 facing the transformer 3, on the lower face 70 of the control board 7. This enables the spacing between the mounting face 20 of the case 2, the transformer 3, and the control board 7 to be reduced, and thinning of the power conversion device 1 can be achieved.

As illustrated in Figs. 1 and 2, the cover 8 is formed in a box shape that is open downward. The cover 8 is mountable to the case 2 so as to cover the mounting face 20 of the case 2, the transformer 3 and the smoothing circuit portion 5 disposed on the mounting face 20, and the control board 7 disposed above the mounting face 20 and the transformer 3. A notch 81 for preventing interference with the input connector 4 when the cover 8 is attached to the case 2 is formed in a rear wall portion of the cover 8. Similarly, notches (not illustrated) for preventing interference with the output connector 6 are formed in a front wall portion of the cover 8.

As illustrated in Fig. 4, in the power conversion device 1, DC current of a predetermined voltage is input from the input connector 4 to the FET module 3121 of the primary-side substrate 31 through the control board 7, converted into AC current, and output to the primary-side winding 3111. When AC current flows through the primary-side winding 3111, AC current flows through the secondary-side winding portion 321 owing to electromagnetic induction. Because the number of turns of the primary-side winding 3111 and the secondary-side winding portion 321 are different from each other, the voltage of the AC current flowing through the secondary-side winding portion **3211[321?]** is different from the voltage of the AC current flowing through the primary-side winding 3111. For example, if the number of turns of the secondary-side winding portion 321 is less than the number of turns of the primary-side winding 3111, the voltage of the AC current flowing through the secondary-side winding portion 321 will be lower than the voltage of the AC current flowing through the primary-side winding 3111. AC current flowing through the secondary-side winding portion 321 is converted into DC current in the FET 3221 of the secondary-side substrate 32, and the waveform of the DC current is smoothed in the smoothing circuit portion 5. The voltage of the smoothed DC current is different from the voltage of the DC current input from the input connector 4. The smoothed DC current is output to the outside from the output connector 6.

When the power conversion device 1 operates as described above, although the primary-side winding 3111 of the primary-side substrate 31, the FET module 3121, the secondary-side winding portion 321 of the secondary-side substrate 32, the FET 3221, and the transformer core 34 generate heat, this heat can be dissipated to the case 2 on which the transformer 3 is installed. In particular, because the sealing resin 33 has thermal conductivity, heat generated by the winding portion 3211 at the upper side of the secondary-side winding portion 321 and by the primary-side winding 3111 can be transmitted to the case 2. In addition, since the FET module 3121 is in direct face-to-face contact with the first mounting area 21 without the intervention of the primary-side mounting portion 312, heat from the FET module 3121 can be efficiently dissipated to the case 2.

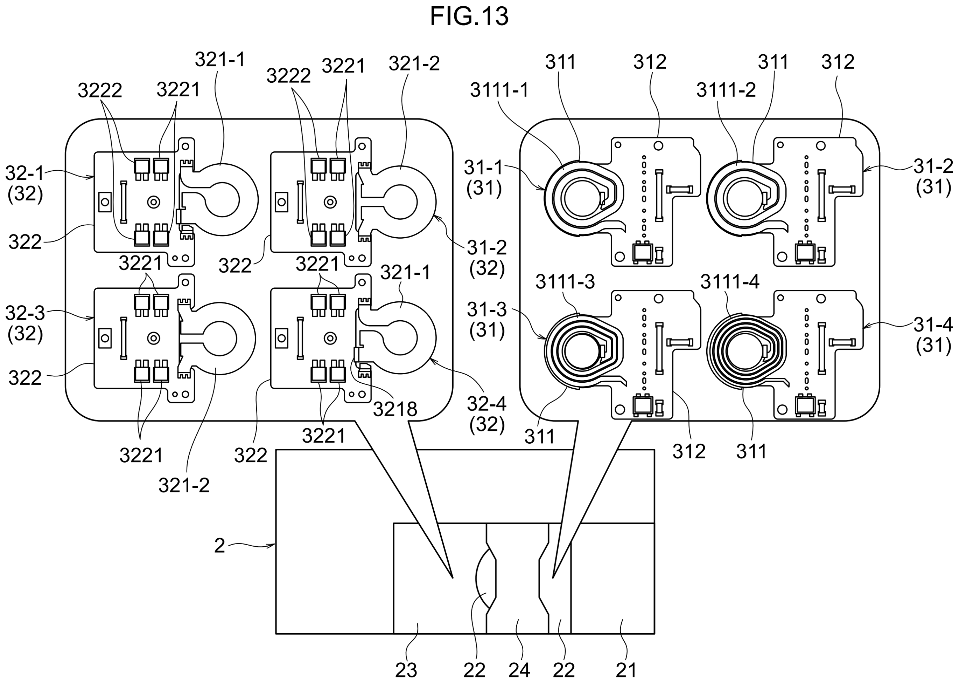

In the power conversion device 1, the primary-side substrate 31 and the secondary-side substrate 32 in the transformer 3 can be selected from and changed between plural types of primary-side and secondary-side substrates that differ in terms of the number of coil turns, mounted components, and the like. These selections and changes are performed in accordance with required specifications such as input voltage and output voltage, and a power conversion device 1 that is capable of supporting various specifications can be obtained. As illustrated in Fig. 13, the primary-side substrate can be appropriately selected from plural types of primary-side substrate, in addition to the primary-side substrate 31 described above. The four types of primary substrate illustrated in Fig. 13 have the same external shape and dimensions as each other, and the FET module 3121 is installed in the same manner; however, the configuration of the primary-side coil formed in the primary-side winding portion 311 is different.

The primary-side winding 3111-1 of the first primary-side substrate 31-1 is formed with two turns (two turns) of coil in a spiral shape on the upper face of the primary-side winding portion 311, linked to these coils, two turns of coil are further spirally formed on the lower face of the primary-side winding portion 311, and a total of four turns of coil are provided. The primary-side winding 3111-2 of the second primary-side substrate 31-2 is formed with two turns (two turns) of coil in a spiral shape on the upper face of the primary-side winding portion 311, linked to these coils, two turns of coil are further formed in each of three layers inside and under the primary-side winding portion 311 in a spiral shape, and a total of eight turns of coil are provided. The primary-side winding 3111-2 is configured such that spiral two-turn coils are formed in four layers linked in the plate thickness direction. Three turns of coil are formed in a spiral manner on the upper face of the primary-side winding portion 311 in the primary-side winding 3111-3 of the third primary-side substrate 31-3, linked to these coils, two coils of two turns and a coil of three turns are further spirally formed in three layers inside and under the primary-side winding portion 311, and a total of 10 turns of coil are provided. The primary-side winding 3111-3 is configured such that two coils of three turns and two coils of two turns in a spiral shape are formed in four layers linked together in the plate thickness direction. Four turns of coil are formed in a spiral manner on the upper face of the primary-side winding portion 311 in the primary-side winding 3111-4 of the fourth primary-side substrate 31-4, linked to these, three coils of three turns are further spirally formed in three layers inside and under the primary-side winding portion 311, and a total of 13 turns of coil are provided. The primary-side winding 3111-4 is configured such that a four-turn coil and three coils of three turns are formed spirally in four layers linked together in the plate thickness direction.

The secondary-side substrate can be appropriately selected from plural types of secondary-side substrates, in addition to the above-described secondary-side substrate 32. The four types of secondary substrate illustrated in Fig. 13 have the same external shape and dimensions as each other; however, the configuration of the secondary-side winding portion 321 and the types of electronic component installed in the secondary-side mounting portion 322 are different. Similarly to the above-described secondary-side substrate 32, the first secondary-side substrate 32-1 has a secondary-side winding portion with a two-turn configuration. Two FETs 3221 and two diodes 3222 (secondary-side electronic components) are mounted on the upper face of the secondary-side mounting portion 322. The two FETs 3221 and the two diodes 3222 are each connected to a wiring pattern formed in the secondary-side mounting portion 322, and a secondary-side circuit (bridge circuit) is configured with these wiring patterns. The secondary-side circuit is a rectifier circuit that is connected to the secondary-side winding portion 3211 and converts AC current flowing through the secondary-side winding portion 3211 into DC current.

The second secondary-side substrate 32-2 differs from the above-described secondary-side substrate 32-1 only in terms of the configuration of the secondary-side winding portion 321. In the secondary-side winding portion 321-2 included in the second secondary-side substrate 32-2, the pair of winding portions 3211, 3212 are connected in parallel to each other, and form a coil of a total of one turn. In this manner, in the second secondary-side substrate 32-2 having the one-turn configuration, the output voltage can be reduced to one half compared to the first secondary-side substrate 32-1 having the two-turn configuration. Further, similarly to the first secondary-side substrate 32-1, the second secondary-side substrate 32-2 is capable of handling a wide range of input voltages, and can ensure high safety.

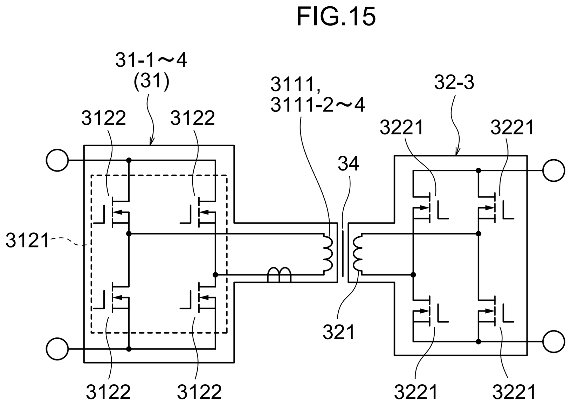

The third secondary-side substrate 32-3 differs from the above-described secondary-side substrate 32-2 only in terms of the types of electronic component to be mounted on the secondary-side mounting portion 322. Four FETs 3221 are mounted on the upper face of the secondary-side mounting portion 322 of the third secondary-side substrate 32-3. As illustrated in Fig. 15, these four FETs 3221 configure a bridge circuit as a secondary-side circuit. The four FETs 3221 are used as both low-side and high-side rectifying devices in the bridge circuit. In the third secondary-side substrate 32-3, the secondary-side circuit is a synchronous rectification type circuit using only the FETs 3221, and higher efficiency can be realized than with the first and second secondary-side substrates 32-1 and 32-2. Further, by configuring the secondary-side circuit as a synchronous rectification type circuit, a bidirectional transformer can be configured with the secondary-side as an input side and the primary-side as an output side.

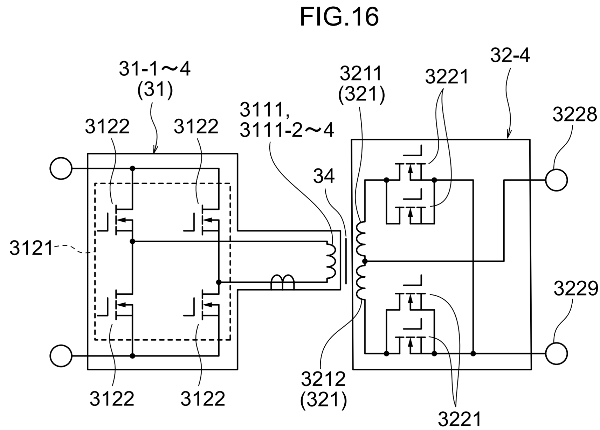

As illustrated in Figs. 13 and 16, in the fourth secondary-side substrate 32-4, the secondary-side circuit configured in the secondary-side mounting portion 322 is a center tap-type circuit. In the secondary-side winding portion 321-1 included in the fourth secondary-side substrate 32-4, the pair of winding portions 3211, 3212 are connected together in series. A third lead portion 3218 extends from the vicinity of this connecting portion. A first output terminal 3228 of the secondary-side circuit is electrically connected to the third lead portion 3218. A second output terminal 3229 of the secondary-side circuit is electrically connected to respective ends of the pair of winding portions 3211, 3212 that are connected in series; namely, to the first lead portion 3215 and the second lead portion 3216. FET units consisting of two FETs 3221 connected in parallel are respectively provided between the first lead portion 3215 and the second lead portion 3216, and the second output terminal 3229. Since the fourth secondary-side substrate 32-4 enables power loss in the secondary-side circuit to be reduced, higher efficiency can be realized, and high current output can be accommodated. Note that in the fourth secondary-side substrate 32-4, since the number of FETs 3221 in each FET unit can be one, and further, since the FET 3221 in the secondary-side circuit can be replaced with a diode, the manufacturing cost of the fourth secondary-side substrate 32-4 can be reduced.

Explanation follows regarding the mechanism and effects of the present exemplary embodiment.

In the power conversion device 1 according to the present exemplary embodiment, DC current input to the input connector 4 is converted into DC current of different voltages in the transformer 3. The converted DC current is smoothed in the smoothing circuit portion 5, and is output to the outside from the output connector 6. The transformer 3 is configured by a primary-side substrate 31, a secondary-side substrate 32, an insulating member 36, a sealing resin 33, and a transformer core 34.

The primary-side substrate 31 includes a primary-side mounting portion 312 on which a primary-side electronic component is mounted, and a primary-side winding portion 311. The secondary-side substrate 32 includes a secondary-side mounting portion 322 on which a secondary-side electronic component is mounted, and a secondary-side winding portion 321, and the secondary-side winding portion 321 is disposed coaxially with the primary-side winding portion 311. The insulating member 36 is disposed with the primary-side winding portion 311 sandwiched therebetween, and the first insulating member 361 and the second insulating member 362 are coupled to each other. The sealing resin 33 seals the primary-side winding portion 311, the secondary-side winding portion 321, and the insulating member 36.

The first insulating member 361 and the second insulating member 362 have plural ribs R1, R3 on faces facing the primary-side winding portion 311. Thus, even in cases in which the thickness or volume of the primary-side winding portion 311 has been changed, by changing the size and number of the plural ribs R1, R3, it is possible to prevent inadvertent displacement of the primary-side winding portion 311 and the occurrence of short molding during molding of the sealing resin 33.

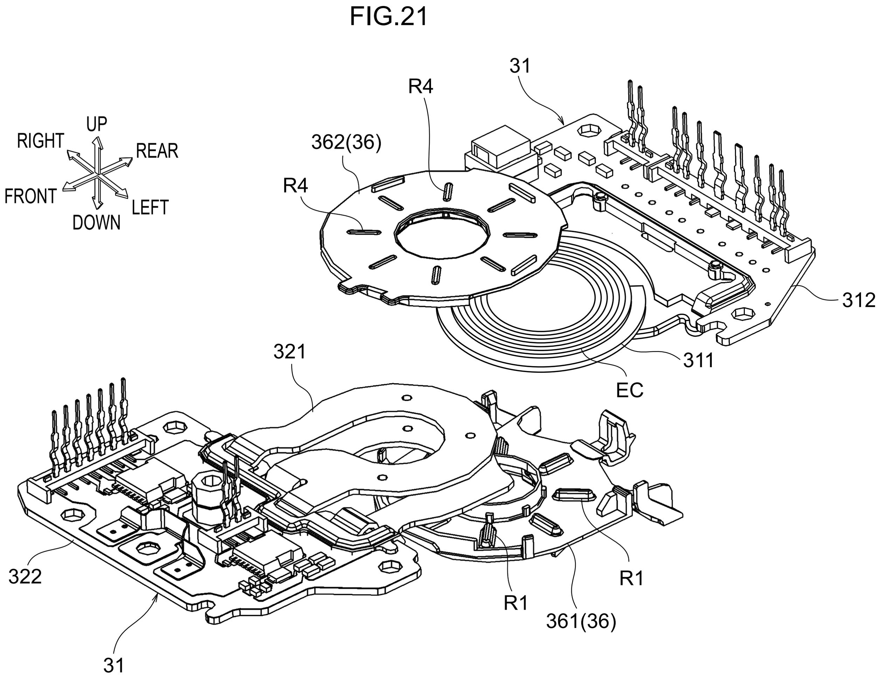

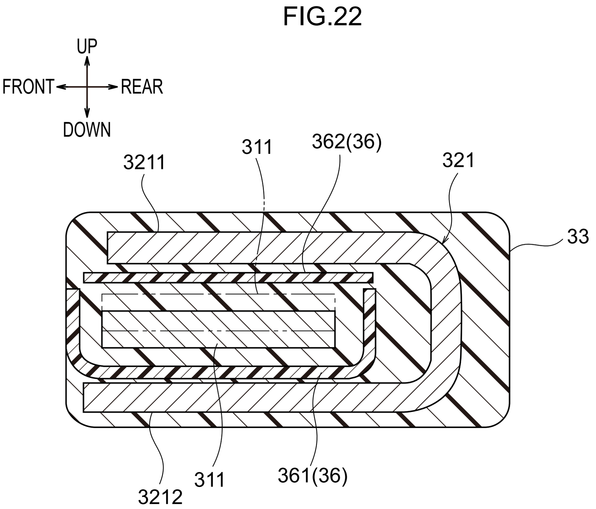

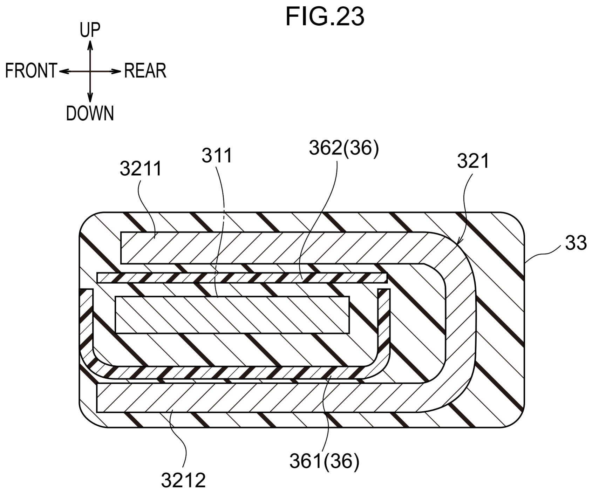

Namely, in the present exemplary embodiment, as the primary-side winding portion 311 of the primary-side substrate 31, not only those in which a conductor pattern is formed on a substrate, but those formed from an enamel wire coil EC as illustrated in Fig. 21, or those formed from a conductor plate can be employed. By changing the material of the primary-side winding portion 311 in this manner, when the thickness or volume of the primary-side winding portion 311 becomes smaller, the primary-side winding portion 311 is pushed down from a normal position (see the two-dot chain line in Fig. 22) toward the lower side as a result of molding pressure during transfer molding of the sealing resin 33 (see the primary-side winding portion 311 illustrated by a solid line in Fig. 22). In this regard, in the present exemplary embodiment, depression of the primary-side winding portion 311 as described above can be prevented by the ribs R1 of the first insulating member 361 (see Fig. 23).

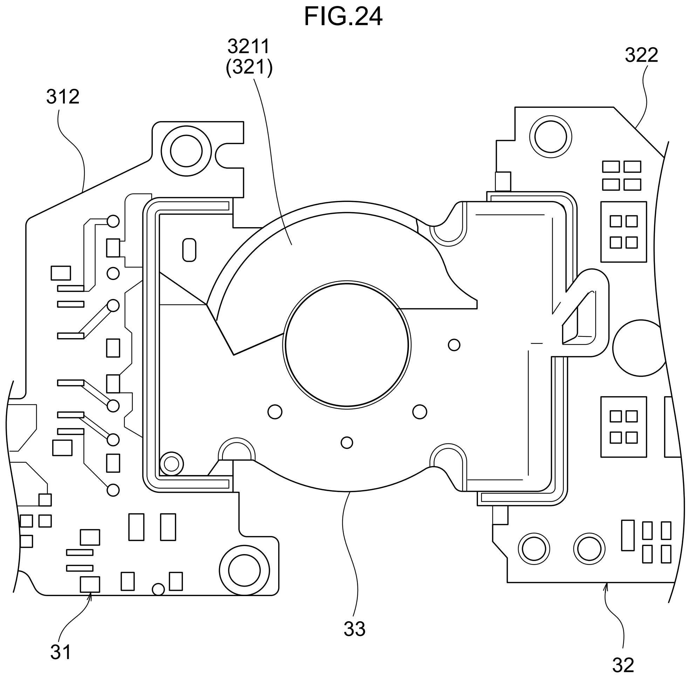

Further, when the volume of the primary-side winding portion 311 becomes smaller, the required amount of the sealing resin 33 is not supplied, and short molding as illustrated in Fig. 24 occurs. In this respect, in the present exemplary embodiment, by changing the size or the number of the ribs R1, R3 so as to make up for the volume difference of the primary-side winding portion 311, the occurrence of short molding as described above can be prevented.

Further, since plural ribs R1, R2, R3, and R4 (convex portions), each having a length in the radial direction of the primary-side winding portion 311 and the secondary-side winding portion 321, are formed in the first insulating member 361 and the second insulating member 362, movement of the primary-side substrate 31 during transfer molding can be suppressed within a wide range along the radial direction of the primary-side winding portion 311.

Further, since plural ribs R1, R2, R3, and R4, which are plural convex portions, are disposed in a row in the circumferential direction of the primary-side winding portion 311 and the secondary-side winding portion 321 in the first insulating member 361 and the second insulating member 362, movement of the primary-side substrate 31 and the secondary-side substrate 32 during transfer molding can be suppressed within a wide range along the circumferential direction of the respective winding portions 311, 321.

Further, the resin configuring the sealing resin 33 and the resin configuring the insulating member 36 have thermal conductivity, and because the sealing resin 33 closely contacts the primary-side winding 3111, the secondary-side winding portion 321, and the insulating member 36 without any gap, heat generated by the primary-side winding 3111 and the secondary-side winding portion 321 when the power conversion device 1 is in operation can be satisfactorily transferred to the case 2 and dissipated.

Further, since the insulating member 36 is mounted at and assembled with the primary-side substrate 31, the primary-side substrate 31 and the insulating member 36 can be handled as a single component, thereby facilitating manufacturing management.

Further, in the present exemplary embodiment, the primary-side substrate 31, the secondary-side substrate 32, and the insulating member 36 are integrated together by the sealing resin 33, and are assembled as the substrate assembly 35. This enables the primary-side substrate 31, the secondary-side substrate 32, the insulating member 36, and the sealing resin 33 to be handled as a single component, thereby facilitating manufacturing management.

Note that in the above-described exemplary embodiments, while the configuration is such that at the first insulating member 361 and the second insulating member 362, plural ribs R1, R2, R3, and R4, which are plural convex portions, formed with their length directions along the radial direction of the respective winding portions 311, 321, are disposed in a row in the circumferential direction of the respective winding portions 311, 321, there is no limitation thereto. The shape, arrangement, number, and the like of the convex portions can be appropriately changed.

Further, while, in the above exemplary embodiments, the configuration is such that the first insulating member 361 and the second insulating member 362 are disposed with the primary-side winding portion 311 interposed therebetween, there is no limitation thereto, and the configuration may be such that the first insulating member 361 and the second insulating member 362 are disposed with the secondary-side winding portion 321 interposed therebetween.

Further, while, in the above exemplary embodiments, plural ribs R1, R2, R3, and R4 are formed on both the first insulating member 361 and the second insulating member 362, there is no limitation thereto, and a configuration in which plural ribs are formed only on one of the first insulating member 361 or the second insulating member 362 may be employed.

In addition, the present disclosure may be practiced with various modifications within a range that does not depart from the gist thereof. Further, the scope of rights of the present disclosure is, of course, not limited to the above exemplary embodiments.

## Claims

1. A power conversion device (1), comprising:
a primary-side substrate (31) having a primary-side mounting portion (312), at which a primary-side electronic component is mounted, and a primary-side winding portion (311);
a secondary-side substrate (32) having a secondary-side mounting portion (322), at which a secondary-side electronic component is mounted, and a secondary-side winding portion (321), the secondary-side winding portion (321) being disposed coaxially with the primary-side winding portion (321);
a pair of insulating members (361, 362) that are joined together, and that are disposed such that one winding portion among the primary-side winding portion (311) or the secondary-side winding portion (321) is interposed therebetween; and
a sealing resin (33) that seals the primary-side winding portion (311), the secondary-side winding portion (321), and the pair of insulating members (361, 362),
wherein at least one of the pair of insulating members (361, 362) has a plurality of convex portions (R1, R2, R3, R4) at a face facing the one winding portion.

2. The power conversion device of claim 1, wherein the plurality of convex portions are ribs (R1, R2, R3, R4) having a length direction along a radial direction of each of the winding portions.

3. The power conversion device of claim 1 or claim 2, wherein the plurality of convex portions (R1, R2, R3, R4) are disposed in a row along a circumferential direction of each of the winding portions.
